# EUROPÄISCHE PATENTANMELDUNG

(11) **EP 1 710 457 A2**
(43) Veröffentlichungstag der Anmeldung: **11.10.2006**
(21) Anmeldenummer: 06006013.4
(22) Anmeldetag: 23.03.2006
(51) Int. Cl.: F16C 33/50, F16C 29/06

(54) **Linearführung mit Wälzkörpern in einer Käfigkette mit Schmierstofftaschen**

(30) Priorität: 07.04.2005 DE 102005015971
(71) Anmelder: Schaeffler KG, 91074 Herzogenaurach (DE)
(72) Erfinder: Menges, Martin, 66424 Homburg (DE)

(57) **Zusammenfassung**

Linearführung mit einem an einer Führungsschiene (1) über Wälzkörper (4) wälzlagerbaren Führungswagen (1), der mit wenigstens einem endlosen Wälzkörperkanal (5) für die Wälzkörper (3) versehen ist, welcher Wälzkörperkanal (5) einen Tragkanal (6) für tragende Wälzkörper (4), einen Rücklaufkanal (9) für rücklaufende Wälzkörper (4) und zwei Umlenkkanäle (10) aufweist, die den Tragkanal (6) und den Rücklaufkanal (9) endlos miteinander verbinden, wobei eine Käfigkette (14) vorgesehen ist, in deren Käfigtaschen (17) jeweils ein Wälzkörper (4) aufgenommen ist, wobei die Käfigkette (14) zwischen einander benachbarten Wälzkörpern (4) angeordnete Käfigstege (15,22,26,33) und wenigstens einen entlang des Wälzkörperkanals (5) erstreckten Käfiggurt (16) aufweist, der die Käfigstege (15,22,26,33) miteinander verbindet, wobei die Wälzkörper (4) in den Käfigtaschen (17) mit Spiel in Erstreckungsrichtung der Käfigkette (14) angeordnet sind, wobei die Käfigstege (15,22,26,33) an ihren den Käfigtaschen (17) zugewandten Seiten mit Schmierstoff füllbare Schmierstofftaschen (20,24,27,29,36) zur Abgabe von Schmierstoff an die Wälzkörper (4) aufweisen.

## Beschreibung

### Gebiet der Erfindung

Die vorliegende Erfindung betrifft eine Linearführung mit einem an einer Führungsschiene über Wälzkörper wälzlagerbaren Führungswagen.

Aus US 6,217,217 B1 beispielsweise ist eine Linearführung mit einem an einer Führungsschiene über Rollen wälzgelagerten Führungswagen bekannt geworden. Der etwa u-förmige Führungswagen umgreift mit seinen beiden Schenkeln die Führungsschiene. Der Führungswagen ist mit mehreren endlosen Rollenkanälen für die Rollen versehen, wobei dieser Rollenkanal einen Tragkanal für tragende Rollen, einen Rücklaufkanal für rücklaufende Rollen und zwei Umlenkkanäle aufweist, die den Tragkanal und den Rücklaufkanal endlos miteinander verbinden. Der Führungswagen umfaßt einen Tragkörper und an beiden Stirnseiten des Tragkörpers angeordnete Kopfstücke. Der Tragkörper ist mit dem Rücklaufkanal und dem Tragkanal versehen und die beiden Kopfstücke sind mit den Umlenkkanälen versehen. In dem endlosen Wälzkörperkanal ist eine Käfigkette vorgesehen, in deren Käfigtaschen jeweils eine Rolle aufgenommen ist, wobei zwischen einander benachbart angeordneten Rollen jeweils ein Käfigsteg angeordnet ist. Zu beiden Stirnseiten der Rollen ist jeweils ein Käfiggurt vorgesehen, der die Käfigstege miteinander verbindet.

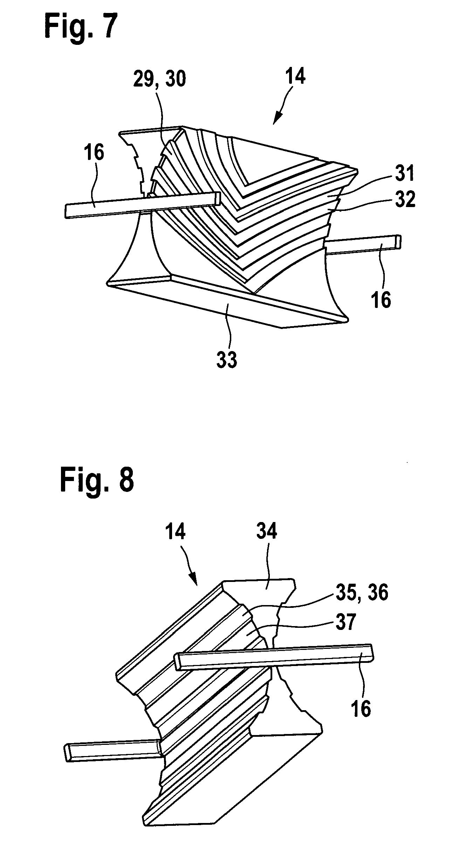

Üblicherweise werden derartige Linearführungen geschmiert, so daß zwischen den Rollen und den Laufbahnen ein Schmierfilm gebildet ist. Zum Nachschmieren der Linearführung ist hier ein an einem der Kopfstücke vorgesehener Schmiernippel angeordnet (Figur 8a), über den Schmierstoff schließlich in den Wälzkörperkanal gelangt.

Aufgabe der vorliegenden Erfindung ist es, eine Linearführung nach den Merkmalen des Oberbegriffs des Anspruchs 1 anzugeben, bei der die Schmierung verbessert ist.

Erfindungsgemäß wird diese Aufgabe dadurch gelöst, dass die Wälzkörper in den Käfigtaschen mit Spiel in Erstreckungsrichtung der Käfigkette angeordnet sind, wobei die Käfigstege an ihren den Käfigtaschen zugewandten Seiten mit Schmierstoff füllbare Schmierstofftaschen zur Abgabe von Schmierstoff an die Wälzkörper aufweisen.

Während eines vollständigen Umlaufs der Käfigkette im endlosen Wälzkörperkanal zieht der im Tragkanal laufende Teil der Käfigkette den im Rücklaufkanal befindlichen Teil der Käfigkette. Im Bereich des Tragkanals werden die rotierenden Wälzkörper in ihre Laufrichtung gerollt. Die Wälzkörper liegen in den Käfigtaschen an den in Laufrichtung gesehen vorderen Käfigstegen an. Ein in der Käfigtasche angeordneter Wälzkörper liegt im Bereich des Rücklaufkanals an dem in Laufrichtung gesehen hinteren Käfigsteg an. Auf diese Weise ist eine geringe oszillierende Bewegung der Wälzkörper zwischen den Käfigstegen der Käfigtaschen sichergestellt. Diese oszillierende Bewegung ermöglicht, dass der Kontakt zwischen dem Wälzkörper und dem Käfigsteg während eines vollständigen Umlaufs unterbrochen wird, so daß Schmierstoff aus den Schmierstofftaschen heraus gelangt und an die Wälzkörper abgegeben werden kann und von dort schließlich an die Laufbahnen gelangt. Der Schmierfilm zwischen dem Wälzkörper und dem Käfigsteg kann durch die oszillierende Bewegung des Wälzkörpers an der Kontaktfläche des Käfigstegs erneuert werden.

Insbesondere aus keramischen Werkstoff gebildete Wälzkörper sind erfindungsgemäß bevorzugt. Die Verwendung von Käfigketten verhindert den unmittelbaren Kontakt einander benachbart angeordneter Keramikwälzkörper. Mit der erfindungsgemäß vorgesehenen Schmierung sind insbesondere mit Keramikwälzkörpern versehene erfindungsgemäße Linearführungen sehr langlebig mit sehr großen Wartungsintervallen. Vorzugsweise sind keramische Rollen als Wälzkörper vorgesehen.

Der Führungswagen ist vorzugsweise u-förmig gebildet und umgreift mit seinen beiden Schenkeln die Führungsschiene. Den Tragkanal begrenzende Laufbahnen für die Wälzkörper sind an den Schenkeln und an den Schenkeln gegenüberliegenden Seiten der Führungsschiene angeordnet, wobei der Schmierstoff von den Wälzkörpern an die Laufbahnen sowohl des Führungswagens als auch der Führungsschiene abgegeben werden kann.

Die Käfigstege können an ihren den Käfigtaschen zugewandten Seiten an die Zylinderflächen der Rollen angepaßte konkave Mantelflächen aufweisen, die mit den Schmierstofftaschen versehen sind. Diese Schmierstofftaschen können in günstiger Weise die Rollen umgreifen und Schmierstoff an die Mantelfläche der Rollen abgeben.

Für eine besonders günstige Verteilung des Schmierstoffs kann die Käfigkette mit einem in die Schmierstofftasche eingesetzten Schmierstoffspeicher aus porösem Werkstoff versehen sein. Der Schmierstoff kann in den Poren gespeichert werden. Die Verteilung der Poren über die Flächen der Schmierstofftasche ermöglicht eine gleichmäßige Verteilung des Schmierstoffs. Vorzugsweise ist in jeder Schmierstofftasche ein Schmierstoffspeicher aus porösem Werkstoff eingesetzt.

Die konischen Mantelflächen der Käfigstege können mit Führungsflächen für die Rollen versehen sein.

Für die bevorzugte Anwendung von Rollen als Wälzkörpern können die konkaven Mantelflächen der Käfigstege mit mehreren Nuten versehen sein, die die Schmierstofftaschen bilden. Diese Nuten können in Drehrichtung der Rollen hintereinander angeordnet sein. Ebenfalls denkbar ist eine zur Drehachse der Rollen parallele Anordnung der Nuten. Ebenfalls denkbar ist es, die Nuten wie ein Fischgrätmuster anzuordnen, dessen Spitze in einer der Drehrichtungen der Rollen liegt. Ferner können die Nuten entlang der Drehachse der Rollen hintereinander angeordnet und parallel zur konkaven Mantelfläche angeordnet sein. Es hat sich herausgestellt, daß in den beschriebenen Anordnungen der Nuten eine besonders sichere Weitergabe von Schmierstoff an die Rollen gewährleistet ist.

Nachstehend wird die Erfindung anhand von sechs in insgesamt acht Figuren abgebildeten Ausführungsbeispielen näher erläutert. Es zeigen:
- Figur 1: einen Querschnitt durch eine erfindungsgemäße Linearführung,
- Figur 2: einen Längsschnitt durch eine erfindungsgemäße Linearführung,
- Figur 3: einen Teil einer mit Rollen versehenen Käfigkette der Linearführung gemäß den Figuren 1 und 2,
- Figur 4: einen Teil der Linearkette aus Figur 3 in perspektivischer Darstellung,
- Figuren 5 bis 8: Ausschnitte von modifizierten Käfigketten in perspektivischer Darstellung.

### Ausführliche Beschreibung der Zeichnung

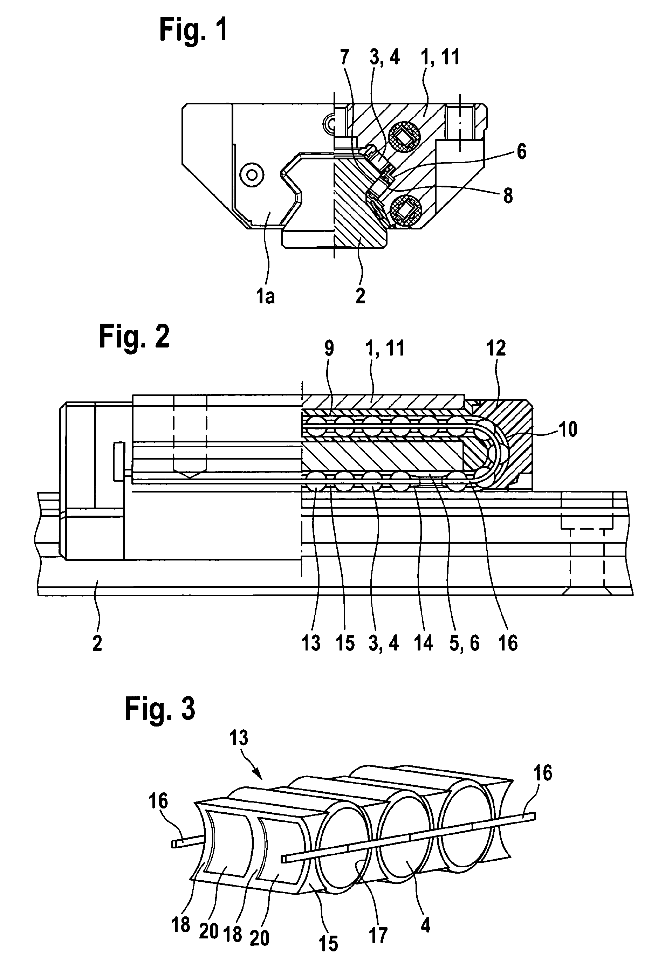

Die Figuren 1 und 2 zeigen eine erfindungsgemäße Linearführung. Ein Führungswagen 1 ist an einer Führungsschiene 2 über Wälzkörper 3 längsverschieblich gelagert. Die Wälzkörper 3 sind durch Rollen 4 aus Keramikwerkstoff gebildet. Der Figur 2 ist zu entnehmen, daß ein endloser Wälzkörperkanal 5 vorgesehen ist, in dem die Rollen 4 endlos umlaufen können. Der Wälzkörperkanal 5 umfaßt einen Tragkanal 6 für tragende Rollen 4. Der Tragkanal 6 ist begrenzt durch an der Führungsschiene 2 und an dem Führungswagen 1 vorgesehene Laufbahnen 7, 8, wie der Figur 1 zu entnehmen ist. Der Wälzkörperkanal 5 umfaßt ferner einen Rücklaufkanal 9 in dem die Rollen 4 unbelastet laufen. Der Wälzkörperkanal 5 umfaßt ferner zwei Umlenkkanäle 10, von denen einer in der Figur 2 abgebildet ist. Die beiden Umlenkkanäle 10 verbinden den Rücklaufkanal 9 mit dem Tragkanal 6 zu dem endlosen Wälzkörperkanal 5. Der Figur 1 ist zu entnehmen, daß der Führungswagen 1 mit zwei Schenkeln 1 a die Führungsschiene 2 umgreift.

Der Führungswagen 1 umfaßt einen Tragkörper 11, an dem die Laufbahnen 8 ausgebildet sind. Der Führungswagen 1 umfaßt ferner zwei Kopfstücke 12, die mit den Umlenkkanälen 10 versehen sind.

In dem endlosen Wälzkörperkanal 5 läuft eine Rollenkette 13 endlos um. Die Rollenkette 13 ist gebildet aus einer Käfigkette 14, die vorzugsweise im Spritzverfahren aus Kunststoff hergestellt ist. Die Käfigkette 14 umfaßt zwischen einander benachbarten Rollen 4 angeordnete Käfigstege 15 und zwei Käfiggurte 16, die zu beiden Stirnseiten der Rollen 4 angeordnet sind und die die Käfigstege miteinander verbinden. Die Käfigkette 14 ist einteilig vorzugsweise aus Kunststoff im Spritzverfahren hergestellt.

Figur 3 zeigt in perspektivischer Darstellung einen Teil der Rollenkette 13. Der Figur 3 ist zu entnehmen, daß die Rollen 4 in Käfigtaschen 17 der Käfigkette 14 angeordnet sind. Die Käfigstege 15 weisen an ihren den Käfigtaschen 17 zugewandten Seiten konkave Mantelflächen 19 auf, so daß sie der Zylinderfläche der Rollen 4 angepaßt sind. An diesen Seiten sind mit Schmierstoff gefüllte Schmierstofftaschen 20 ausgebildet. An diesen konkaven Mantelflächen 19 sind ferner konkav geformte Führungsflächen 18 ausgebildet, die an die Zylinderfläche der Rollen 4 angepaßt sind.

Die vorliegende erfindungsgemäße Linearführung ist in bekannter Weise vierreihig ausgebildet, so daß insgesamt vier endlose Wälzkörperkanäle vorgesehen sind.

Die Rollen 4 sind in den Käfigtaschen 17 mit geringem Spiel in Erstreckungsrichtung der Rollenkette versehen. Wenn die Wälzkörperkette 13 einmal umläuft, legen sich die Rollen 4 im Rücklaufkanal 9 an den in Laufrichtung rückwärtigen Käfigsteg 15 einer Käfigtasche 17 an. Dagegen legen sich die Rollen 4 im Tragkanal 6 an den vorderen Käfigsteg 15 der Käfigtasche 17 an. Das bedeutet, daß während eines vollständigen Umlaufs die Rollen 4 wechselweise an den hinteren Käfigsteg 15 und an den vorderen Käfigsteg 15 einer Käfigtasche 17 anliegen. Dieser Effekt ist bedingt durch die Tatsache, daß die Rollen im Tragkanal bei sich bewegendem Führungswagen 1 in Rotation versetzt werden und an den Laufbahnen 7, 8 abwälzen. Unter dieser linearen Bewegung wird die Käfigkette 14 mitgenommen. Dagegen findet im Rücklaufkanal 9 eine Änderung dahingehend statt, daß nun die Käfigkette 14 die Rollen 4 mitnimmt. Das in Erstreckungsrichtung vorgesehene Spiel der Rollen 4 in den Käfigtaschen 17 ist eingestellt, wenn die Rollenkette 13 im Wälzkörperkanal 5 eingebaut ist.

Der in den Käfigtaschen 17 vorhandene Schmierstoff wird an die Rollen 4 abgegeben und gelangt von den Rollen 4 an die Laufbahnen 7, 8, so daß eine einwandfreie Schmierung der Linearführung gewährleistet ist.

Wenn - wie weiter oben bereits ausgeführt wurde - die Rollen 4 mit geringem Spiel in den Käfigtaschen 17 angeordnet sind, kann ein besonders günstiger Schmiereffekt durch das Zusammenspiel des Taschenspiels mit den an den Käfigstegen 15 angeordneten Schmierstofftaschen 20 erzielt werden. Durch die beschriebene oszillierende Bewegung der Rollen 4 in den Käfigtaschen 17 wird der Schmierstoff aus den Schmierstofftaschen 20 besser an die Rollen 4 abgegeben. Denn die Rollen 4 sind nicht ständig in Gleitkontakt mit den konkaven Mantelflächen 19, so daß immer dann, wenn die Rolle 4 beabstandet ist von der konkaven Mantelfläche 19 Schmierstoff aus der Schmierstofftasche 20 auch an die konkave Führungsfläche 18 des Käfigsteges 17 gelangt. Wenn die Rolle 4 erneut mit der konkaven Mantelfläche 19 des Käfigstegs 17 in Kontakt kommt, kann somit über die vollständige axiale Erstreckung der Rolle 4 Schmierstoff an die Rolle 4 abgegeben werden. Zudem ist zwischen der Führungsfläche 18 und der Rolle 4 ein Schmierfilm aufgebaut. Während des Abhebens der Rolle 4 von der konkaven Mantelfläche 19 kann sich ein Saugeffekt einstellen, so daß Schmierstoff aus der Schmierstofftasche 20 heraus gelangt.

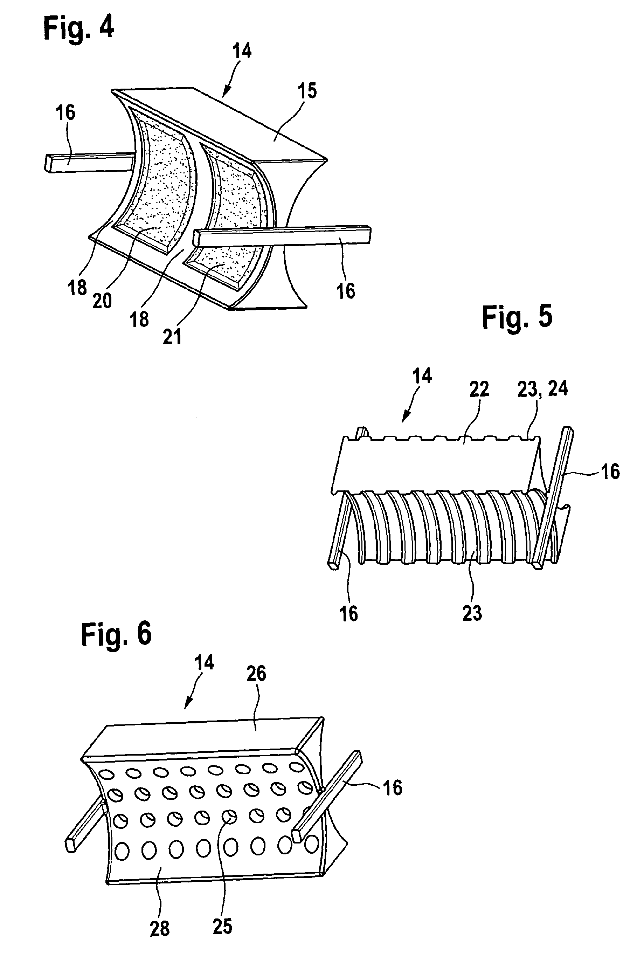

Figur 4 zeigt ein Teilstück der Käfigkette 14, mit einem Käfigsteg 15 und den beiden Käfiggurten 16. Deutlich zu erkennen sind auch die Führungsflächen 18 für die Rollen 4 und die Schmierstofftaschen 20. Im Unterschied zu dem Ausführungsbeispiel gemäß Figur 3 ist bei den Ausführungsbeispiel gemäß der Figur 4 zusätzlich in diese Schmierstofftaschen 20 ein Schmierstoffspeicher 21 aus porösem Werkstoff eingesetzt. Der Schmierstoffspeicher 21 kann aufgrund seiner porösen Struktur den Schmierstoff in günstiger Weise halten und gleichmäßig über die konkave Erstreckung verteilt halten. Somit ist über einen großen Umfang eine Abgabe von Schmierstoff aus den Schmierstofftaschen 20 an die Rollen 4 gewährleistet.

Je nach Anwendungsfall mag es zweckmäßig sein, modifizierte Schmierstofftaschen vorzusehen. Figur 5 zeigt beispielsweise die Käfigkette 14 mit modifiziertem Käfigsteg 22. Dieser Käfigsteg 22 ist ebenfalls an seinen den Käfigtaschen 17 zugewandten Seiten konkav geformt und an die Zylinderfläche der Rollen 4 angepaßt. Bei diesem Ausführungsbeispiel ist der Käfigsteg 22 an seinem den Käfigtaschen 17 zugewandten Seiten mit einer Vielzahl von Nuten 23 versehen, die die Schmierstofftaschen 24 bilden. Diese Nuten 23 sind entlang der Drehachse der Rollen 4 hintereinander angeordnet und erstrecken sich parallel zur Zylinderfläche der Rollen 4.

Gemäß Figur 6 können anstelle der Nuten auch eine Vielzahl von Durchgangslöchern 25 vorgesehen sein, die Schmierstofftaschen 27 bilden. Außerhalb der Durchgangslöcher 25 bilden die konkav geformten Mantelflächen dieser Käfigstege 26 eine Führungsfläche 28 für die Rollen 4.

Gemäß Figur 7 sind Schmierstofftaschen 29 durch Nuten 30 gebildet, die nach Art eines Fischgrätmusters 31 angeordnet sind. Zwischen zwei einander benachbarten Nuten 30 sind Führungsflächen 32 für die Rollen 4 an dem Käfigsteg 33 ausgebildet.

Bei dem Ausführungsbeispiel gemäß Figur 8 ist ein Käfigsteg 34 vorgesehen, bei dem eine Vielzahl von Nuten 35 Schmierstofftaschen 36 bilden, wobei diese Nuten 35 parallel zur Drehachse der Rollen 4 angeordnet sind, und wobei eine Vielzahl von Nuten 35 hintereinander entlang der konkav geformten Mantelfläche des Käfigsteges 34 angeordnet sind.

In allen Ausführungsbeispielen sind die Rollen 4 aus keramischem Werkstoff gebildet. Erfindungsgemäße Linearführungen, die mit keramischen Rollen versehen sind, eignen sich in besonderer Weise für Einsatzzwecke, bei denen große Wartungsintervalle gefordert sind.

### Bezugszahlenliste

- 1: Führungswagen
- 2: Führungsschiene
- 3: Wälzkörper
- 4: Rolle
- 5: Wälzkörperkanal
- 6: Tragkanal
- 7: Laufbahn
- 8: Laufbahn
- 9: Rücklaufkanal
- 10: Umlenkkanal
- 11: Tragkörper
- 12: Kopfstück
- 13: Rollenkette
- 14: Käfigkette
- 15: Käfigsteg
- 16: Käfiggurt
- 17: Käfigtasche
- 18: konkave Führungsfläche
- 19: konkave Mantelfläche
- 20: Schmierstofftasche
- 21: Schmierstoffspeicher
- 22: Käfigsteg
- 23: Nut
- 24: Schmierstofftasche
- 25: Durchgangsloch
- 26: Käfigsteg
- 27: Schmierstofftasche
- 28: Führungsfläche
- 29: Schmierstofftasche
- 30: Nut
- 31: Fischgrätmuster
- 30: Nut
- 31: Fischgrätmuster
- 32: Führungsfläche
- 33: Käfigsteg
- 34: Käfigsteg
- 35: Nut
- 36: Schmierstofftasche

## Patentansprüche

1. Linearführung mit einem an einer Führungsschiene (1) über Wälzkörper (3) wälzlagerbaren Führungswagen (1), der mit wenigstens einem endlosen Wälzkörperkanal (5) für die Wälzkörper (3) versehen ist, welcher Wälzkörperkanal (5) einen Tragkanal (6) für tragende Wälzkörper (3), einen Rücklaufkanal (9) für rücklaufende Wälzkörper (3) und zwei Umlenkkanäle (10) aufweist, die den Tragkanal (6) und den Rücklaufkanal (9) endlos miteinander verbinden, wobei eine Käfigkette (14) vorhersehen ist, in deren Käfigtaschen (17) jeweils ein Wälzkörper (3) aufgenommen ist, wobei die Käfigkette (14) zwischen einander benachbarten Wälzkörpern (3) angeordnete Käfigstege (15, 22, 26, 33) und wenigstens einen entlang des Wälzkörperkanals (5) erstreckten Käfiggurt (16) aufweist, der die Käfigstege (15, 22, 26, 33) miteinander verbindet, **dadurch gekennzeichnet, dass** die Wälzkörper (3) in den Käfigtaschen (17) mit Spiel in Erstreckungsrichtung der Käfigkette (14) angeordnet sind, wobei die Käfigstege (15, 22, 26, 33) an ihren den Käfigtaschen (17) zugewandten Seiten mit Schmierstoff füllbare Schmierstofftaschen (20, 24, 27, 29, 36) zur Abgabe von Schmierstoff an die Wälzkörper (3) aufweisen.

2. Linearführung nach Anspruch 1, bei der die Wälzkörper (3), vorzugsweise Rollen (4), aus keramischen Werkstoff gebildet sind.

3. Linearführung nach Anspruch 2, bei der die Käfigstege (15, 22, 26, 33) an ihren den Käfigtaschen (17) zugewandten Seiten an die Zylinderfläche der Rollen (4) angepaßte konkave Mantelflächen aufweisen, die mit den Schmierstofftaschen (20, 24, 27,29.36) versehen sind.

4. Linearführung nach Anspruch 3, bei der die konkaven Mantelflächen Führungsflächen (18, 28, 32, 37) für die Rollen (4) aufweisen.

5. Linearführung nach Anspruch 1, bei der der etwa u-förmige Führungswagen (1) mit seinen beiden Schenkeln (1 a) die Führungsschiene (2) umgreift, wobei den Tragkanal (6) begrenzende Laufbahnen (7, 8) für die Wälzkörper (3) an den Schenkeln (1a) und an den Schenkeln gegenüberliegenden Seiten der Führungsschiene (2) angeordnet sind, wobei Schmierstoff von den Wälzkörpern (3) an die Laufbahnen (7, 8) abgegeben wird.

6. Linearführung nach Anspruch 1, bei der die Käfigkette (14) mit einem in die Schmierstoffasche (20) eingesetzten Schmierstoffspeicher (21) vorzugsweise aus porösem Werkstoff versehen ist.

7. Linearführung nach Anspruch 6, bei der in jeder Schmierstofftasche (20) ein Schmierstoffspeicher aus porösem Werkstoff eingesetzt ist.

8. Linearführung nach Anspruch 3, bei der die konkaven Mantelflächen jeweils mit mehreren Nuten (23, 30, 35) versehen sind, die die Schmierstofftaschen (24, 29, 36) bilden.

9. Linearführung nach Anspruch 8, bei der die Nuten (35, 30) in Drehrichtung der Rollen (4) hintereinander angeordnet sind.

10. Linearführung nach Anspruch 8, bei der die Nuten (35) parallel zur Drehachse der Rollen (4) angeordnet sind.

11. Linearführung nach Anspruch 8, bei der die Nuten (30) wie ein Fischgrätmuster (31) angeordnet sind, dessen Spitze in einer Drehrichtung der Rollen (4) liegt.
